# EUROPEAN PATENT APPLICATION

(11) **EP 4 576 615 A2**
(43) Date of publication of application: **25.06.2025**
(21) Application number: 23864786.1
(22) Date of filing: 15.09.2023
(51) Int. Cl.: H04B 17/14

(54) **PROCESSING APPARATUS AND ELECTRONIC DEVICE**

(30) Priority: 16.09.2022 CN 202211132205
(71) Applicant: Huawei Technologies Co., Ltd., Shenzhen, Guangdong 518129 (CN)
(72) Inventor: HUANG, Xin, Shenzhen, Guangdong 518129 (CN); OU, Songlin, Shenzhen, Guangdong 518129 (CN); YU, Yi, Shenzhen, Guangdong 518129 (CN); LU, Zhicui, Shenzhen, Guangdong 518129 (CN)
(74) Representative: Gill Jennings & Every LLP
(86) International application number: PCT/CN2023/119031
(87) International publication number: WO 2024/056057

(57) **Abstract**

A processing apparatus and an electronic device are provided. The processing apparatus includes a transmit path of a first communication system, a transmit path of a satellite communication system, a receive path of the satellite communication system, and a first calibration path. The first communication system and the satellite communication system share the receive path of the satellite communication system. A first end of the first calibration path is connected to the transmit path of the first communication system, or a first end of the first calibration path is connected to the transmit path of the satellite communication system. A second end of the first calibration path is connected to the receive path of the satellite communication system. When the first calibration path is connected to the first communication system, the first calibration path may be used to calibrate the first communication system. When the first calibration path is connected to the satellite communication system, the first calibration path may be used to calibrate the satellite communication system. Therefore, in the foregoing manner, the satellite communication system may reuse a calibration path of the first communication system for calibration.

## Description

### CROSS-REFERENCE TO RELATED APPLICATIONS

This application claims priority to Chinese Patent Application No. 202211132205.6, filed with the China National Intellectual Property Administration on September 16, 2022 and entitled "PROCESSING APPARATUS AND ELECTRONIC DEVICE", which is incorporated herein by reference in its entirety.

### TECHNICAL FIELD

The present invention relates to the field of communication technologies, and in particular, to a processing apparatus and an electronic device.

### BACKGROUND

In a satellite communication scenario, a radio determination satellite system (radio determination satellite system, RDSS) is a unique service function of a BeiDou navigation satellite system, and can provide a bidirectional short message information service (that is, a satellite communication function). When sending information to a satellite, a user may send a message to the satellite based on an integrated RDSS transmit (transmit, TX) link. When receiving information from the satellite, the user may receive the information from the satellite based on an integrated RDSS receive (receive, RX) link.

With development of communications, applying the RDSS to a consumer-level terminal such as a mobile phone or a watch becomes a trend. A general radio frequency device used in the RDSS is a non-ideal device, and may usually introduce a non-linear error. Therefore, calibration is needed to ensure performance of the system. Currently, the RDSS is detected and calibrated mainly by using a dedicated device, resulting in high calibration costs and low benefits.

### SUMMARY

This application provides a processing apparatus and an electronic device, to resolve problems of high calibration costs and low benefits of an RDSS.

According to a first aspect, this application provides a processing apparatus. The processing apparatus includes a transmit path of a first communication system, a transmit path of a satellite communication system, a receive path of the satellite communication system, and a first calibration path. The first communication system and the satellite communication system share the receive path of the satellite communication system. A first end of the first calibration path is connected to the transmit path of the first communication system, or a first end of the first calibration path is connected to the transmit path of the satellite communication system. A second end of the first calibration path is connected to the receive path of the satellite communication system.

When the first calibration path is connected to the first communication system, the first calibration path may be used to calibrate the first communication system. When the first calibration path is connected to the satellite communication system, the first calibration path may be used to calibrate the satellite communication system. Therefore, in the foregoing manner, the satellite communication system may reuse a calibration path of the first communication system for calibration.

In a possible design, the first calibration path may be a calibration path of the first communication system. In this manner, the first communication system may be reused to calibrate the satellite communication system, so that hardware costs can be reduced, and a layout area of a chip can be reduced.

In a possible design, the transmit path of the satellite communication system is connected to the receive path of the satellite communication system. According to the foregoing design, a loopback path of the satellite communication system may be constructed, so that the satellite communication system may be calibrated by using the first calibration path.

In a possible design, the first communication system is a cellular communication system, or the first communication system is a Bluetooth communication system, or the first communication system is a wireless fidelity communication system.

In a possible design, the processing apparatus further includes a receive path of a satellite positioning system. An output end of the receive path of the satellite positioning system is connected to an input end of the transmit path of the satellite communication system; and an input end of the receive path of the satellite positioning system is connected to an output end of the transmit path of the satellite communication system.

In the foregoing manner, the output end of the receive path of the satellite positioning system is connected to the input end of the transmit path of the satellite communication system, and the input end of the receive path of the satellite positioning system is connected to the output end of the transmit path of the satellite communication system, so that the satellite positioning system may reuse the loopback path of the satellite communication system, and the satellite positioning system may also be calibrated when the satellite communication system is calibrated. In addition, in the foregoing manner, wiring complexity can be reduced, and interference can be reduced.

In a possible design, that an input end of the receive path of the satellite positioning system is connected to an output end of the transmit path of the satellite communication system includes: The input end of the receive path of the satellite positioning system is connected to the output end of the transmit path of the satellite communication system through a second calibration path.

In a possible design, that an output end of the receive path of the satellite positioning system is connected to an input end of the transmit path of the satellite communication system includes: The output end of the receive path of the satellite positioning system is connected to the input end of the transmit path of the satellite communication system via a first calibration control module, and the first calibration control module is configured to calibrate the satellite positioning system.

In a possible design, the second calibration path includes at least one of an attenuator or a phase shifter.

In a possible design, that the transmit path of the satellite communication system is connected to the receive path of the satellite communication system includes: The transmit path of the satellite communication system is connected to the receive path of the satellite communication system via a second calibration control module, and the second calibration control module is configured to calibrate the satellite communication system.

In a possible design, the transmit path of the first communication system is connected to the receive path of the satellite communication system.

According to the foregoing design, a loopback path of the first communication system may be constructed, so that the first communication system may be calibrated by using the first calibration path.

In a possible design, that the transmit path of the first communication system is connected to the receive path of the satellite communication system includes: The transmit path of the first communication system is connected to the receive path of the satellite communication system via a third calibration control module, and the third calibration control module is configured to calibrate the first communication system.

In a possible design, the first calibration path includes at least one of a pin or a power detector.

In a possible design, the first end of the first calibration path is the pin.

In a possible design, the second end of the first calibration path is the power detector.

According to a second aspect, this application provides an electronic device. The electronic device includes the processing apparatus according to any one of the first aspect or the possible designs.

### BRIEF DESCRIPTION OF DRAWINGS

FIG. 1 is a diagram of a communication scenario according to an embodiment of this application;
FIG. 2 is a diagram of a structure of a radio frequency unit according to an embodiment of this application;
FIG. 3 is a diagram of a structure of a radio frequency unit according to an embodiment of this application;
FIG. 4 is a diagram of a structure of a radio frequency unit according to an embodiment of this application;
FIG. 5 is a diagram of a structure of a radio frequency unit according to an embodiment of this application;
FIG. 6 is a diagram of a structure of a radio frequency unit according to an embodiment of this application;
FIG. 7 is a diagram of a structure of a radio frequency unit according to an embodiment of this application;
FIG. 8 is a diagram of a structure of a radio frequency unit according to an embodiment of this application;
FIG. 9 is a diagram of a structure of a radio frequency unit according to an embodiment of this application;
FIG. 10 is a diagram of a structure of a processing apparatus according to an embodiment of this application;
FIG. 11 is a diagram of a structure of a processing apparatus according to an embodiment of this application; and
FIG. 12 is a diagram of a structure of a processing apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings.

The following describes some terms in embodiments of this application, to facilitate understanding of a person skilled in the art.
(1) Radio navigation satellite system (radio navigation satellite system, RNSS): The RNSS sends a radio navigation satellite signal, so that a user performs ranging, positioning, and the like based on the radio navigation satellite signal.
(2) Radio determination satellite system (radio determination satellite system, RDSS): The RDSS can provide a bidirectional short message information service (that is, a satellite communication function). When sending information to a satellite, a user may send a message to the satellite based on an integrated RDSS transmit (transmit, TX) link. When receiving information from the satellite, the user may receive the information from the satellite based on an integrated RDSS receive (receive, RX) link.
(3) Low-pass filter (low-pass filter, LPF): configured to filter a signal, to suppress impact of an unnecessary signal (such as interference) on a link and improve performance of a communication system.

Variable-gain amplifier (variable-gain amplifier, VGA): configured to perform automatic gain control on an input signal.

Analog-to-digital converter (analog-to-digital converter, ADC): configured to perform analog-to-digital conversion.

Digital-to-analog converter (digital-to-analog converter, ADC): configured to perform digital-to-analog conversion.

Mixer (MIXER): configured to perform down-conversion on an input signal and up-conversion on an output signal.

Phase-locked loop (phase-locked loop, PLL): configured to generate a target frequency of a communication system.

Low-noise amplifier (low-noise amplifier, LNA): configured to amplify an input signal, to reduce noise interference. When the LNA is integrated in a chip, the LNA may be referred to as an internal gain amplifier (internal LNA, iLNA).

Power amplifier (power amplifier, PA): configured to amplify a transmit power of an output signal. The PA may be deployed on an external board of a chip.

Pulse power amplifier (pulse power amplifier, PPA): configured to amplify a transmit power of an output signal. The PPA may be integrated in a chip.

Antenna (Antenna): configured to: receive an input signal, or send an output signal. For example, the antenna is configured to receive an L1/L5 signal or the like in the satellite positioning system. The L1/L5 signal in the satellite communication system may include frequencies such as B1I, B1C, B2a, and B2b of the BeiDou system, and may also include frequency signals of global positioning systems such as the global positioning system (global positioning system, GPS), the global navigation satellite system (global navigation satellite system, GLONASS), and the Galileo (Galileo), and may also include frequency signals of regional positioning systems such as the quasi-zenith satellite system (quasi-zenith satellite system, QZSS) and the Indian regional navigation satellite system (Indian regional navigation satellite system, IRNSS).

Phase shifter (Phase Shifter): configured to adjust a phase of an input signal.

Power detector (pdet): configured to: detect an input power and convert the input power into a direct current signal.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plural of items (pieces). For example, at least one item (piece) of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are intended to distinguish between a plurality of objects, but are not intended to limit sizes, content, an order, a time sequence, priorities, importance degrees, or the like of the plurality of objects. For example, a first calibration path and a second calibration path are merely used to distinguish between different calibration paths, but do not indicate different structures, priorities, importance degrees, or the like of the two calibration paths.

It should be noted that, a "connection" in embodiments of this application may be understood as an electrical connection, and a connection (or linkage) between two electrical elements may be a direct or indirect connection between the two electrical elements. For example, that A is connected to B may be that A is directly connected to B, or may be that A is indirectly connected to B through one or more other electrical elements. For example, that A is connected to B may alternatively be that A is directly connected to C, C is directly connected to B, A and B are connected through C. In some scenarios, the "connection" may alternatively be understood as coupling, for example, electromagnetic coupling between two inductors. In conclusion, the connection between A and B enables transmission of electric energy between A and B.

It should be noted that, in this application, the term such as "example" or "for example" is used to give an example, an illustration, or a description. Any embodiment or design scheme described as an "example" or "for example" in this application should not be explained as being more preferred or having more advantages than another embodiment or design scheme. To be precise, the term such as "example" or "for example" is intended to present a related concept in a specific manner.

The terms "include", "have", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

The foregoing describes some terms in embodiments of this application. The following describes technical features in embodiments of this application.

The RDSS has clear indicator requirements on a receive end and a transmit end. For example, in the General Specification for BeiDou Navigation Satellite System Position Reporting and Short Message Terminals, it is mentioned that sensitivity of receiving an RDSS signal from a BeiDou satellite by a BeiDou communication terminal is not greater than -124 dBm when an information bit error rate of the BeiDou communication terminal is less than 1x10⁻⁵, and carrier suppression of a radiation signal should be not greater than -30 dB. Within a beam width range of a radiation antenna of the BeiDou communication terminal, an EIRP value of the radiation signal should be not less than 3.5 dBW and not greater than 19 dBW. However, a general radio frequency device of the RDSS is a non-ideal device, and may introduce a non-linear error. Therefore, calibration is required to ensure performance of the RDSS. Currently, the RDSS is generally integrated in a dedicated terminal device, for example, a ship-borne integrated user machine, an airborne geophysical prospecting terminal, a voice call terminal, or a solar positioning and monitoring terminal. The dedicated terminal device generally uses a dedicated device to perform detection and calibration on the RDSS.

With development of communications, applying the RDSS to a consumer-level terminal such as a mobile phone or a watch becomes a trend. However, calibration performed by using the dedicated device is costly and inefficient, and is not suitable for promotion in a consumer-level terminal device.

A processing apparatus provided in this application is intended to resolve the foregoing problem. A calibration path of an RNSS/Wi-Fi/BT/cellular system is reused to calibrate the RDSS without affecting calibration between systems such as the RNSS/Wi-Fi/BT/cellular system and user experience, thereby improving a positioning capability and a communication capability of a consumer-level terminal device such as a mobile phone, and further reducing an area of an entire chip and system costs.

First, an application scenario of the processing apparatus provided in embodiments of this application is described.

This application may be applied to the field of a satellite communication system/cellular (Cellular) system/Bluetooth (Bluetooth, BT) communication system/wireless fidelity (wireless fidelity, Wi-Fi) communication system integrated chip.

For example, the processing apparatus provided in embodiments of this application may be used in a scenario such as a terminal device. The terminal device may also be referred to as a terminal, UE, a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, telemedicine, a smart grid, smart furniture, smart office, smart wear, smart transportation, and a smart city. The terminal may be a mobile phone, a tablet computer, a computer having a wireless transceiver function, a wearable device, a vehicle, an unmanned aerial vehicle, a helicopter, an airplane, a ship, a robot, a mechanical arm, a smart home device, or the like. A specific technology and a specific device form that are used by the terminal are not limited in embodiments of this application.

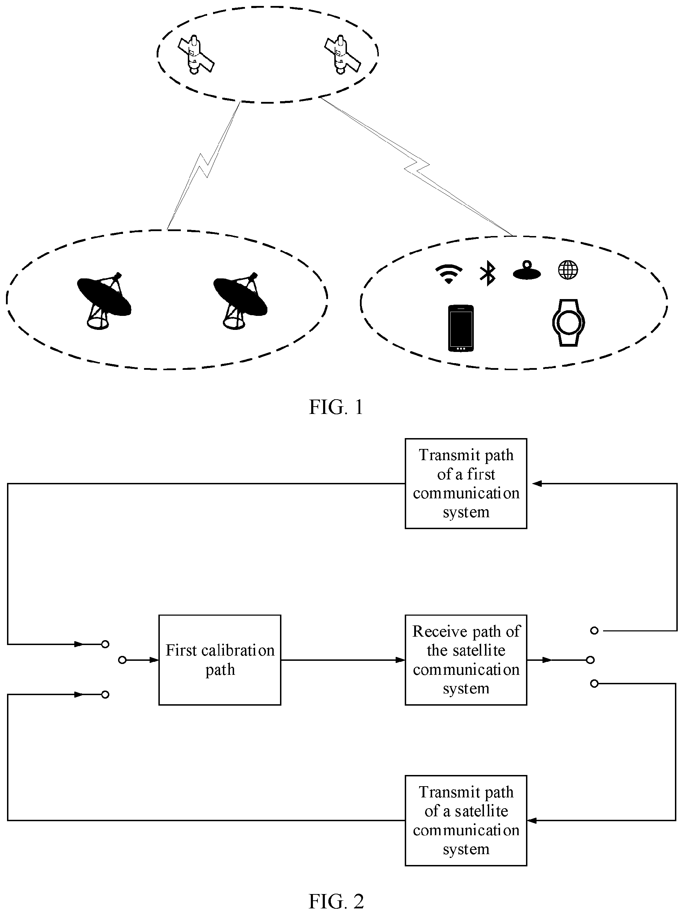

The terminal device may perform communication by using a satellite communication service. For example, in an emergency scenario or a scenario without a network, the terminal device may perform communication by using the satellite communication service. As shown in FIG. 1, a terminal device sends a message to a satellite, and the satellite forwards the message to a ground station. After processing the message, the ground station returns information to the satellite, and the satellite forwards the information to the terminal device. Before performing communication by using the satellite communication service, the terminal device may calibrate the satellite communication system, to ensure a communication success rate.

The following clearly and completely describes the technical solutions in embodiments of this application with reference to the accompanying drawings in embodiments of this application.

The processing apparatus in embodiments of this application includes a radio frequency unit, and may further include a baseband unit. The radio frequency unit is configured to perform signal processing on an input signal/output signal. The baseband unit is configured to: parse information carried in the input signal, generate the output signal, and the like. For example, search, tracking, and message parsing are performed on a carrier frequency and a code phase of an input signal of a satellite positioning system, to finally parse information such as a location, a speed, and time of a user machine. For another example, information carried in an input signal of a Wi-Fi system is captured, decoded, and the like, to track the signal of the Wi-Fi system. For still another example, packing, modulation, filtering, and the like are performed on information carried in an output signal of the satellite communication system, to implement functions such as information assembling and noise cancellation.

The following first describes a structure of the radio frequency unit.

FIG. 2 shows an example of a diagram of a structure of a radio frequency unit. As shown in FIG. 2, the radio frequency unit includes a transmit path of a first communication system, a transmit path of a satellite communication system, a receive path of the satellite communication system, and a first calibration path. The first communication system and the satellite communication system share the receive path of the satellite communication system. A first end of the first calibration path is connected to the transmit path of the first communication system, or a first end of the first calibration path is connected to the transmit path of the satellite communication system. A second end of the first calibration path is connected to the receive path of the satellite communication system.

For example, the satellite communication system may be a system that provides a communication service, such as an RDSS, a Globalstar communication system, or an Iridium communication system. The first communication system may be a cellular system, or the first communication system is a BT system, or the first communication system is a Wi-Fi system.

In a possible implementation, the first calibration path may be a calibration path of the first communication system.

When the first calibration path is connected to the first communication system, the first calibration path may be used to calibrate the first communication system. When the first calibration path is connected to the satellite communication system, the first calibration path may be used to calibrate the satellite communication system. Therefore, in the foregoing manner, the satellite communication system may reuse a calibration path of the first communication system for calibration.

In an example, the first calibration path may include at least one of a pin or a power detector. It should be understood that the first calibration path may further include another component. This is not specifically limited herein.

Specifically, the first end of the first calibration path may be the pin (Pin). That is, the pin of the first calibration path may be connected to the transmit path of the first communication system, or connected to the transmit path of the satellite communication system. When calibration is performed on the first communication system, the pin of the first calibration path is connected to the transmit path of the first communication system. When calibration is performed on the satellite communication system, the pin of the first calibration path is connected to the transmit path of the satellite communication system.

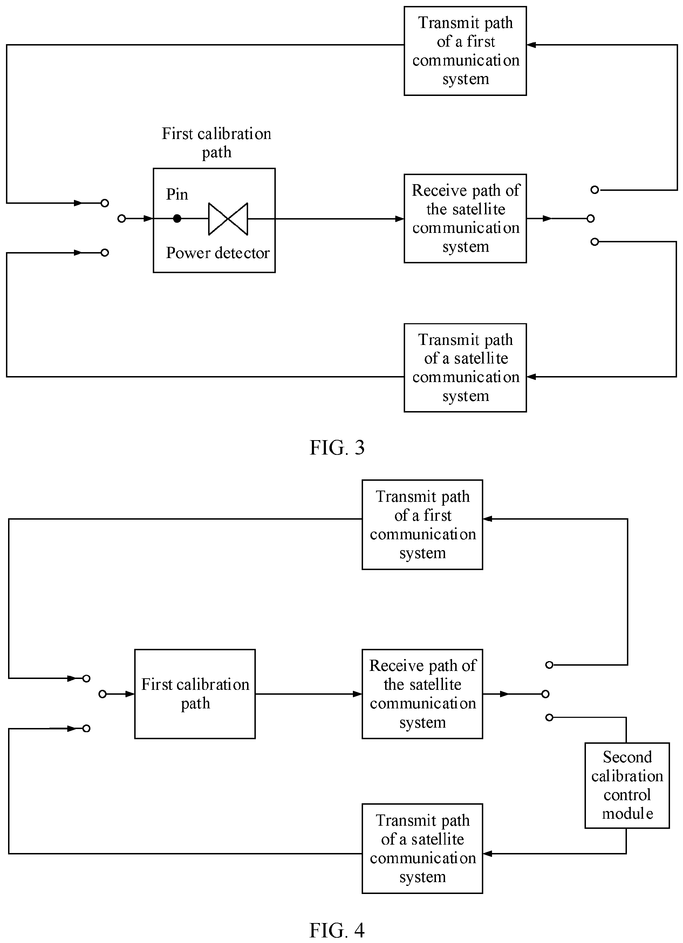

The second end of the first calibration path may be the power detector. That is, the power detector of the first calibration path is connected to the receive path of the satellite communication system, as shown in FIG. 3.

In the foregoing radio frequency unit, the receive path of the satellite communication system may be connected to the transmit path of the satellite communication system, or the receive path of the satellite communication system may be connected to the transmit path of the first communication system, as shown in FIG. 2.

When the receive path of the satellite communication system is connected to the transmit path of the satellite communication system, and the first end of the first calibration path is connected to the transmit path of the satellite communication system, a loopback path of the satellite communication system may be constructed, so that the satellite communication system may be calibrated by using the first calibration path.

When the receive path of the satellite communication system is connected to the transmit path of the first communication system, and the first end of the first calibration path is connected to the transmit path of the first communication system, a loopback path of the first communication system may be constructed, so that the first communication system may be calibrated by using the first calibration path.

In some embodiments, the satellite communication system and the first communication system may reuse the first calibration path in a time-division manner. In this embodiment, when the satellite communication system reuses the first calibration path, the receive path of the satellite communication system is connected to the transmit path of the satellite communication system, and the first end of the first calibration path is connected to the transmit path of the satellite communication system. When the first communication system reuses the first calibration path, the receive path of the satellite communication system is connected to the transmit path of the first communication system, and the first end of the first calibration path is connected to the transmit path of the first communication system.

In a possible implementation, the transmit path of the satellite communication system may be connected to the receive path of the satellite communication system via a second calibration control module, and the second calibration control module is configured to calibrate the satellite communication system, as shown in FIG. 4.

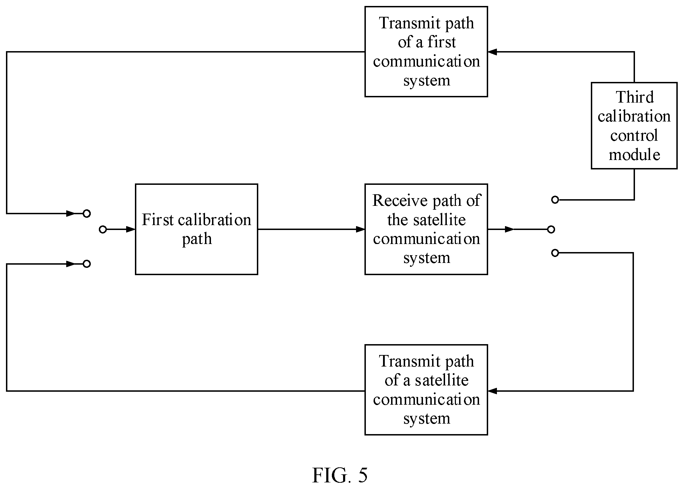

The transmit path of the first communication system may be connected to the receive path of the satellite communication system via a third calibration control module, and the third calibration control module is configured to calibrate the first communication system, as shown in FIG. 5.

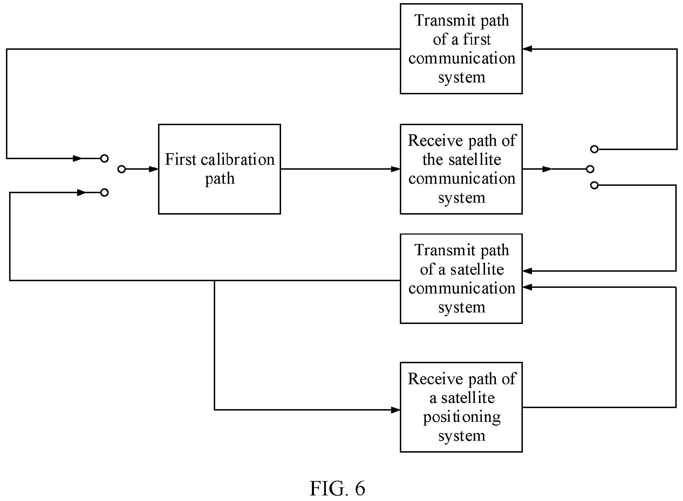

Optionally, the radio frequency unit may further include a receive path of a satellite positioning system. An output end of the receive path of the satellite positioning system is connected to an input end of the transmit path of the satellite communication system; and an input end of the receive path of the satellite positioning system is connected to an output end of the transmit path of the satellite communication system, as shown in FIG. 6.

In the foregoing manner, the output end of the receive path of the satellite positioning system is connected to the input end of the transmit path of the satellite communication system, and the input end of the receive path of the satellite positioning system is connected to the output end of the transmit path of the satellite communication system, so that the satellite positioning system may reuse the loopback path of the satellite communication system, and the satellite positioning system may also be calibrated when the satellite communication system is calibrated. In addition, in the foregoing manner, wiring complexity can be reduced, and interference can be reduced.

For example, the satellite positioning system may be a system that provides a positioning service, such as an RNSS, a Globalstar positioning system, or an Iridium positioning system.

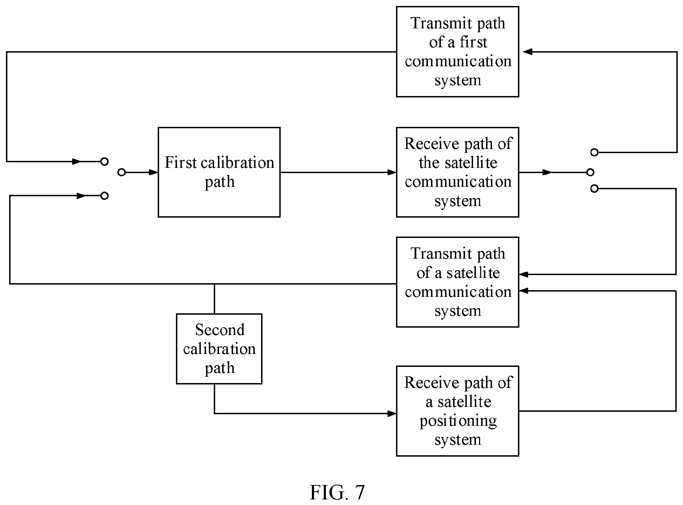

The input end of the receive path of the satellite positioning system is specifically connected to the output end of the transmit path of the satellite communication system through a second calibration path, as shown in FIG. 7.

For example, the second calibration path may include at least one of an attenuator or a phase shifter.

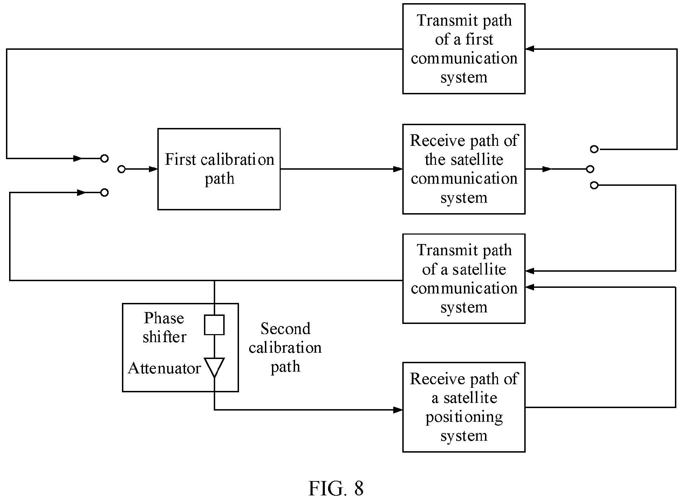

In an example, the phase shifter of the second calibration path may be connected to the output end of the transmit path of the satellite communication system. The phase shifter of the second calibration path is connected to the input end of the receive path of the satellite positioning system, as shown in FIG. 8.

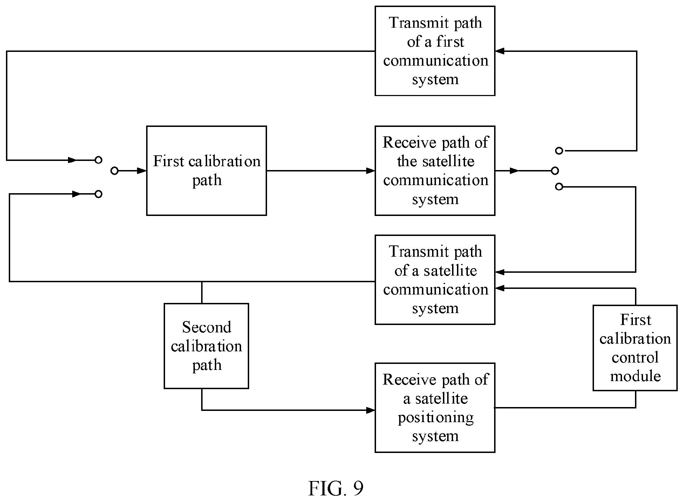

The output end of the receive path of the satellite positioning system may be specifically connected to the input end of the transmit path of the satellite communication system via a first calibration control module, and the first calibration control module is configured to calibrate the satellite positioning system, as shown in FIG. 9.

The following describes a structure of the baseband unit.

The baseband unit may include a baseband processing module of the first communication system. The baseband processing module of the first communication system may be connected to the transmit path of the first communication system. The baseband processing module of the first communication system may generate a transmit signal, and send the transmit signal by using the transmit path of the first communication system. The baseband processing module of the first communication system may be further connected to the receive path of the satellite communication system. The baseband processing module of the first communication system may receive a signal and process the signal by using the receive path of the satellite communication system.

The baseband unit may further include a baseband processing module of the satellite communication system. The baseband processing module of the satellite communication system may be connected to the transmit path of the satellite communication system. The baseband processing module of the satellite communication system may generate a transmit signal, and send the transmit signal by using the transmit path of the satellite communication system. The baseband processing module of the satellite communication system may be further connected to the receive path of the satellite communication system. The baseband processing module of the satellite communication system may receive a signal and process the signal by using the receive path of the satellite communication system.

The baseband unit may further include a baseband processing module of the satellite positioning system. The baseband processing module for satellite positioning may be connected to the transmit path of the satellite communication system. The baseband processing module for satellite positioning may be further connected to the receive path of the satellite positioning system.

In a possible implementation, the first end of the first calibration path may be controlled by the baseband unit to connect to the transmit path of the first communication system, or controlled by the baseband unit to connect to the transmit path of the satellite communication system. The control operation may be implemented by the baseband processing module that is of the first communication system and that is in the baseband unit, or may be implemented by the baseband processing module of the satellite communication system, or may be implemented by another functional module in the baseband unit.

In a possible implementation, the receive path of the satellite communication system may be controlled by the baseband unit to connect to the transmit path of the satellite communication system, or controlled by the baseband unit to connect to the transmit path of the first communication system. The control operation may be implemented by the baseband processing module that is of the satellite positioning system and that is in the baseband unit, or may be implemented by the baseband processing module of the satellite communication system, or may be implemented by another functional module in the baseband unit.

In an example, the first calibration control module, the second calibration control module, and the third calibration control module may be functional modules in the baseband unit.

Optionally, a receive path (for example, the receive path of the satellite communication system or the receive path of the satellite positioning system) in this application may include one or more of the following components: an LPF, a VGA, an ADC, a MIXER, a PLL, or an iLNA. It should be understood that the receive path may further include another component. This is not specifically limited herein.

Optionally, a transmit path (for example, the transmit path of the first communication system or the transmit path of the satellite communication system) in this application may include one or more of the following components: a DAC, an LPF, a MIXER, or a PPA.

Optionally, the receive path (for example, the receive path of the satellite communication system or the receive path of the satellite positioning system) in this application may be further connected to an antenna by using one or more of the following components: a first LPF, an LNA, or a second LPF.

Optionally, the transmit path (for example, the transmit path of the first communication system or the transmit path of the satellite communication system) in this application may be further connected to an antenna by using one or more of the following components: an LPF or a PA.

Optionally, the transmit path of the first communication system and the transmit path of the satellite communication system may be connected to the first calibration path by using one or more of the following components: an LPF or a PA.

For ease of understanding of a structure of the processing apparatus in this application, the following separately describes the structure of the processing apparatus with reference to specific examples by using an example in which the first communication system is a Wi-Fi system, a BT system, or a cellular system.

In the following examples, it is assumed that the satellite communication system is an RDSS, the satellite positioning system is an RNSS, the first calibration path includes a pin and a power detector, a receive path (for example, the receive path of the satellite communication system or the receive path of the satellite positioning system) includes an LPF, a VGA, an ADC, a MIXER, a PLL, and an iLNA, a transmit path (for example, the transmit path of the first communication system or the transmit path of the satellite communication system) includes: a DAC, an LPF, a MIXER, and a PPA, the receive path (for example, the receive path of the satellite communication system or the receive path of the satellite positioning system) is connected to an antenna by using the following components: two LPFs and one LNA, and the transmit path (for example, the transmit path of the first communication system or the transmit path of the satellite communication system) is connected to an antenna by using the following components: an LPF and a PA. The second calibration path includes an attenuator and a phase shifter.

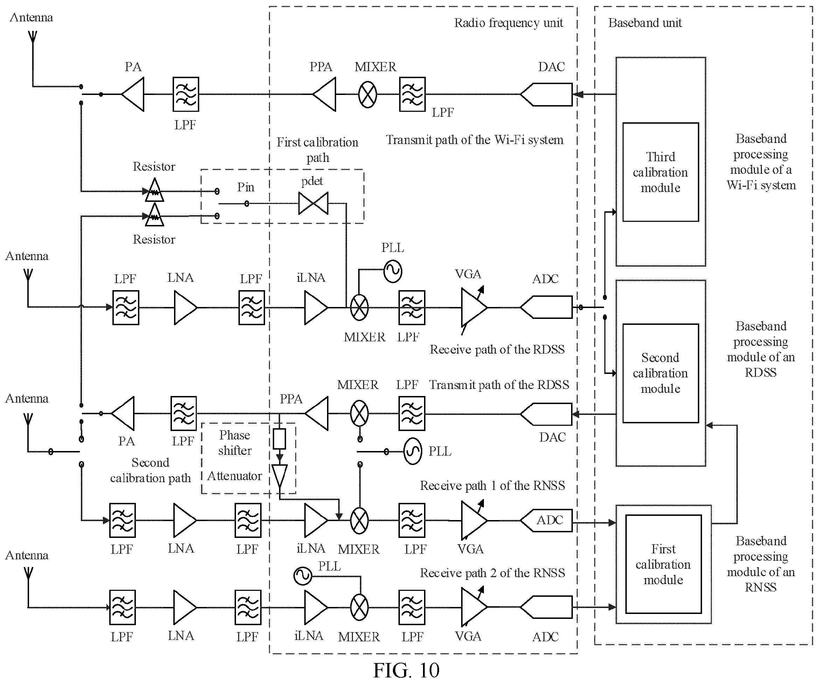

Example 1: It is assumed that the first communication system is a Wi-Fi system. The structure of the processing apparatus may be shown in FIG. 10.

A baseband processing module of the Wi-Fi system is connected to a DAC of a transmit path of the Wi-Fi system, and the baseband processing module of the Wi-Fi system is connected to an ADC of a receive path of the RDSS. A PPA of the transmit path of the Wi-Fi system is connected to an antenna by using the following components: an LPF and a PA.

A baseband processing module of the RDSS is connected to a DAC of a transmit path of the RDSS, and the baseband processing module of the RDSS is connected to the ADC of the receive path of the RDSS. A PPA of the transmit path of the RDSS is connected to an antenna by using the following components: an LPF and a PA. An iLNA of the receive path of the RDSS is connected to an antenna by using the following components: two LPFs and one LNA.

A baseband processing module of the RNSS is connected to the DAC of the transmit path of the RDSS by using the baseband processing module of the RDSS, and the baseband processing module of the RNSS is connected to an ADC of a receive path of the RNSS.

Optionally, the radio frequency unit may include two receive paths of the RNSS, that is, a receive path 1 and a receive path 2. The receive path 1 of the RNSS is connected to the transmit path of the RDSS, and is configured to calibrate the RNSS. The receive path 1 of the RNSS may be configured to receive an L1 signal of the RNSS.

The receive path 2 of the RNSS is connected to the transmit path of the RDSS, and is configured to receive an input signal of the RNSS. The receive path 2 of the RNSS may be configured to receive an L2 signal, an L5 signal, and/or the like of the RNSS.

iLNAs of the two receive paths of the RDSS each are connected to an antenna by using the following components: two LPFs and one LNA.

The pin of the first calibration path is connected to the PPA in the transmit path of the Wi-Fi system by using the following components: a resistor, an LPF, and a PA. Alternatively, the pin of the first calibration path is connected to the PPA in the transmit path of the RDSS by using the following components: a resistor, an LPF, and a PA. The two resistors each are configured to control a circuit connected to the pin of the first calibration path.

The power detector of the first calibration path is connected to a MIXER in the receive path of the RDSS.

The phase shifter of the second calibration path is connected to the PPA of the transmit path of the RDSS, and the attenuator of the second calibration path is connected to a MIXER of one receive path of the RNSS.

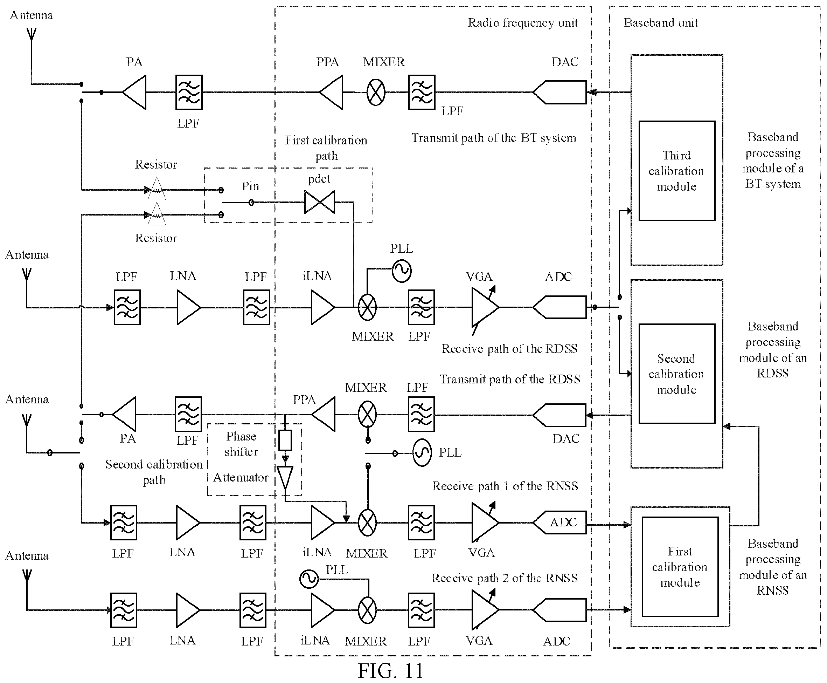

Example 2: It is assumed that the first communication system is a BT system. Example 2 is similar to Example 1. A difference lies in that the first communication system in Example 1 is the Wi-Fi system, and the first communication system in Example 2 is the BT system. Other connection relationships are similar. Details are not described herein again. The structure of the processing apparatus may be shown in FIG. 11.

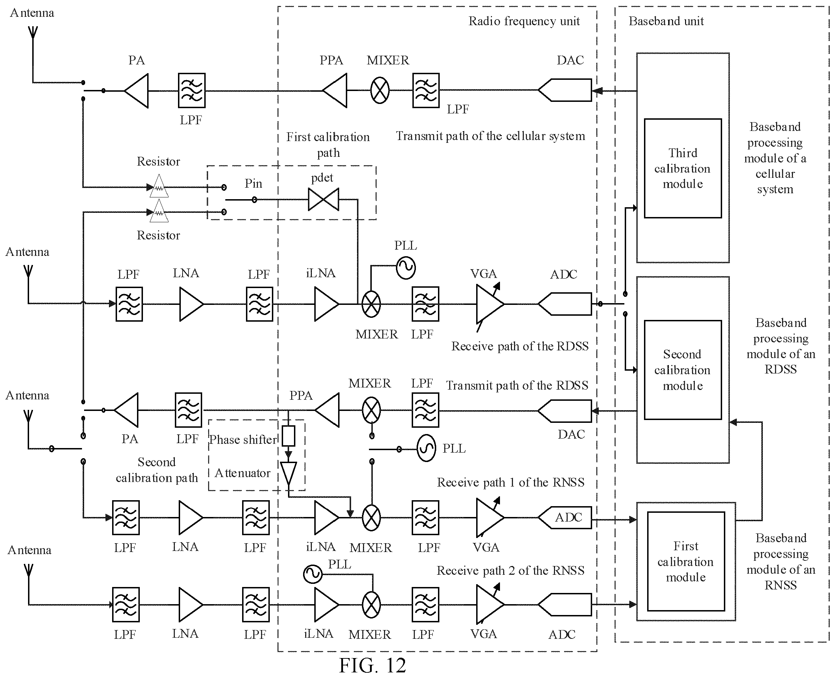

Example 3: It is assumed that the first communication system is a cellular system. Example 3 is similar to Example 1. A difference lies in that the first communication system in Example 1 is the Wi-Fi system, and the first communication system in Example 3 is the cellular system. Other connection relationships are similar. Details are not described herein again. The structure of the processing apparatus may be shown in FIG. 12.

An embodiment of this application further provides an electronic device. The electronic device includes the foregoing processing apparatus.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of the following claims and their equivalent technologies.

## Claims

1. A processing apparatus, wherein the processing apparatus comprises a transmit path of a first communication system, a transmit path of a satellite communication system, a receive path of the satellite communication system, and a first calibration path, and the first communication system and the satellite communication system share the receive path of the satellite communication system;
a first end of the first calibration path is connected to the transmit path of the first communication system, or a first end of the first calibration path is connected to the transmit path of the satellite communication system; and
a second end of the first calibration path is connected to the receive path of the satellite communication system.

2. The processing apparatus according to claim 1, wherein the transmit path of the satellite communication system is connected to the receive path of the satellite communication system.

3. The processing apparatus according to claim 1 or 2, wherein the first communication system is a cellular communication system, or the first communication system is a Bluetooth communication system, or the first communication system is a wireless fidelity communication system.

4. The processing apparatus according to any one of claims 1 to 3, wherein the processing apparatus further comprises a receive path of a satellite positioning system;
an output end of the receive path of the satellite positioning system is connected to an input end of the transmit path of the satellite communication system; and
an input end of the receive path of the satellite positioning system is connected to an output end of the transmit path of the satellite communication system.

5. The processing apparatus according to claim 4, wherein that an input end of the receive path of the satellite positioning system is connected to an output end of the transmit path of the satellite communication system comprises:
the input end of the receive path of the satellite positioning system is connected to the output end of the transmit path of the satellite communication system through a second calibration path.

6. The processing apparatus according to claim 4 or 5, wherein that an output end of the receive path of the satellite positioning system is connected to an input end of the transmit path of the satellite communication system comprises:
the output end of the receive path of the satellite positioning system is connected to the input end of the transmit path of the satellite communication system via a first calibration control module, and the first calibration control module is configured to calibrate the satellite positioning system.

7. The processing apparatus according to claim 5 or 6, wherein the second calibration path comprises at least one of an attenuator or a phase shifter.

8. The processing apparatus according to any one of claims 1 to 7, wherein that the transmit path of the satellite communication system is connected to the receive path of the satellite communication system comprises:
the transmit path of the satellite communication system is connected to the receive path of the satellite communication system via a second calibration control module, and the second calibration control module is configured to calibrate the satellite communication system.

9. The processing apparatus according to any one of claims 1 to 8, wherein the transmit path of the first communication system is connected to the receive path of the satellite communication system.

10. The processing apparatus according to claim 9, wherein that the transmit path of the first communication system is connected to the receive path of the satellite communication system comprises:
the transmit path of the first communication system is connected to the receive path of the satellite communication system via a third calibration control module, and the third calibration control module is configured to calibrate the first communication system.

11. The processing apparatus according to any one of claims 1 to 10, wherein the first calibration path comprises at least one of a pin or a power detector.

12. The processing apparatus according to claim 11, wherein the first end of the first calibration path is the pin.

13. The processing apparatus according to claim 11 or 12, wherein the second end of the first calibration path is the power detector.

14. An electronic device, wherein the electronic device comprises the processing apparatus according to any one of claims 1 to 13.
